# EUROPÄISCHE PATENTSCHRIFT

(11) **EP 1 396 769 B1**
(45) Veröffentlichungstag und Bekanntmachung des Hinweises auf die Patenterteilung: **12.12.2007**
(21) Anmeldenummer: 03013607.1
(22) Anmeldetag: 16.06.2003
(51) Int. Cl.: G05B 9/03

(54) **Ansteuervorrichtung für eine Verbrauchereinheit, insbesondere eines Kraftfahrzeugs**
Drive control device for a load, particularly for a motor vehicle
Dispositif de commande pour une charge, notamment pour un véhicule automobile

(30) Priorität: 06.09.2002 DE 10241459
(43) Veröffentlichungstag der Anmeldung: 10.03.2004
(73) Patentinhaber: ROBERT BOSCH GMBH, 70442 Stuttgart (DE)
(72) Erfinder: Klein, Juergen, 71735 Eberdingen (DE); Eisenhardt, Harald, 71277 Rutesheim (DE); Rasch, Bernhard, 70736 Fellbach (DE)

(56) Entgegenhaltungen:
- DE-A- 4 220 247
- US-A- 5 713 643
- US-B1- 6 230 094

## Beschreibung

Die Erfindung betrifft eine Ansteuervorrichtung für eine Verbrauchereinheit, insbesondere eines Kraftfahrzeugs, gemäß dem Oberbegriff des Anspruches 1.

Eine derartige Ansteuervorrichtung ist z.B. aus der US-A-5 713 643 für die Ansteuerung eines Antiblockiersystems eines Kraftfahrzeugs bekannt.

Weiterhin ist es bekannt, eine entsprechende Ansteuervorrichtung für einen Anlasser einzusezten, wobei über den Freigabeschaltkreis eine zusätzliche Sicherung realisiert wird, die eine Ansteuerung des Verbrauchers bei fehlerhaften Betriebszuständen des Kraftfahrzeugs unterbindet. Bei der bekannten Ansteuervorrichtung wird dem Freigabeschaltkreis ein Signal zugeführt, welches für das Vorliegen eines Kraftschlusses zwischen dem Motor und dem Antriebsstrang repräsentativ ist. Bei Vorliegen eines derartigen Kraftschluss-Signals unterbindet der Freigabeschaltkreis unabhängig vom Logik-Schaltkreis das Ansteuern des Verbrauchers, in diesem Falle also des Anlassers.

Bei den bekannten Ansteuervorrichtungen ist die Gefahr des Auftretens fehlerhafter oder undefinierter Betriebszustände, die die Funktion des Freigabeschaltkreises unterlaufen, bei deren Auftreten also dennoch eine Ansteuerung möglich ist, noch nicht mit ausreichend großer Sicherheit gebannt.

Es ist daher die Aufgabe der vorliegenden Erfindung, eine Ansteuervorrichtung der eingangs genannten Art derart weiterzubilden, dass ihre Betriebssicherheit erhöht ist.

Die Aufgabe ist erfindungsgemäß gelöst durch eine Ansteuervorrichtung mit den im Anspruch 1 genannten Merkmalen.

Durch die Funktionsüberwachung des Logik-Schaltkreises ist sichergestellt, dass insbesondere unabhängig von anderen Fehlern auftretende Fehlfunktionen des Logik-Schaltkreises erkannt und in einem derartigen Fall die Ansteuerung des Verbrauchers verhindert wird. Der Überwachungsschaltkreis kann zudem einfacher aufgebaut sein als der Logik-Schaltkreis, was zu kürzeren Signallaufzeiten bei der Ansteuerung des Verbrauchers führt. Dies ist insbesondere dann von Vorteil, wenn der Verbraucher eine Endstufe in Form eines Leistungsmoduls zur Ansteuerung des Verbrauchers aufweist, da diese durch den schnell reagierenden Überwachungsschaltkreis effizient geschützt werden kann. Weiterhin ergibt sich eine Erhöhung der Betriebssicherheit der Ansteuervorrichtung dadurch, dass der Logik-Schaltkreis und der Freigabeschaltkreis redundant arbeiten.

Die erfindungsgemäße Ansteuervorrichtung eignet sich insbesondere für Klimagebläse und elektrische Zuheizsysteme als Verbraucher.

Bei einem Freigabeschaltkreis gemäß Anspruch 2 wirken sich durch Fehler in der Ansteuervorrichtung hervorgerufene Änderungen des Fehlersignals nicht auf die Funktion des Freigabeschaltkreises aus. Dies erhöht zusätzlich die Betriebssicherheit der Ansteuervorrichtung.

Hierbei wird durch eine Ausführung des Logik-Schaltkreises gemäß Anspruch 3 eine bauliche Vereinfachung der Ansteuervorrichtung realisiert.

Eine Diagnoseleitung gemäß Anspruch 4 führt zur Möglichkeit der Überwachung der Funktion des Freigabeschaitkreises durch den Logik-Schaltkreis. Dieser kann im Falle des Vorliegens eines erfassten Fehlerzustandes des Freigabesignals eine entsprechende Fehlermeldung generieren und an eine Anzeigeeinheit weiterleiten.

Eine Auslegung der Ansteuervorrichtung gemäß Anspruch 5 führt zu einer redundanten Ausführung des Logik-Schaltkreises einerseits und des Überwachungsschaltkreises andererseits in Bezug auf die Funktionen Überwachung und Ansteuerung.

Ein Überwachungsschaltkreis gemäß Anspruch 6 erhöht nochmals die Betriebssicherheit der Ansteuervorrichtung.

Ein Überwachungsschaltkreis gemäß Anspruch 7 reduziert die Gefahr des Auftretens undefinierter Betriebszustände des Logik-Schaltkreises und/oder des Freigabeschaltkreises.

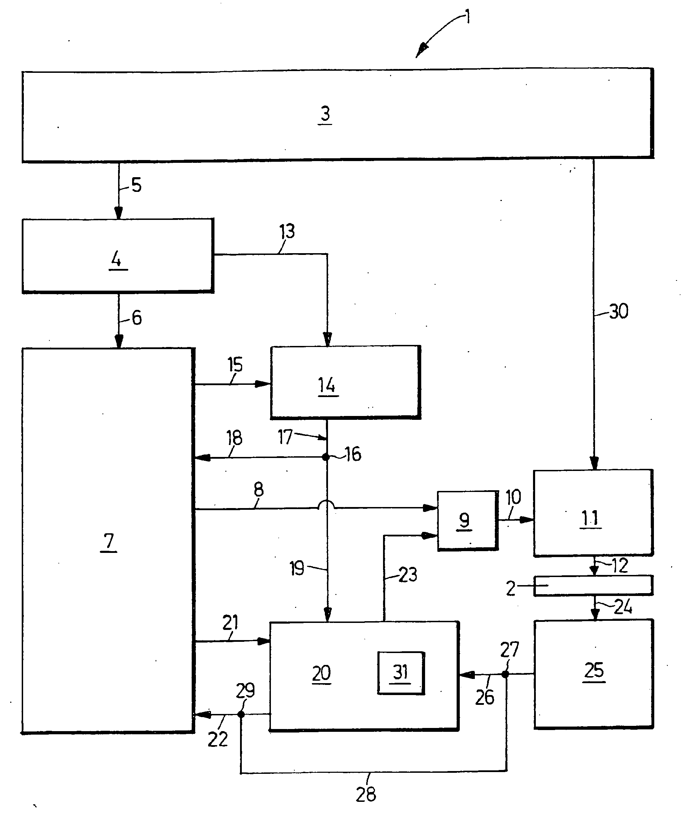

Ein Ausführungsbeispiel der Erfindung wird nachfolgend anhand der Zeichnung näher erläutert. Die einzige Figur zeigt in einer schematischen Blockdarstellung eine erfindungsgemäße Ansteuervorrichtung für eine Verbrauchereinheit eines Kraftfahrzeugs.

Eine in der Zeichnung insgesamt mit dem Bezugszeichen 1 bezeichnete Ansteuervorrichtung dient der Ansteuerung eines Verbrauchers in Form eines Klimagebläses 2 eines nicht näher dargestellten Kraftfahrzeuges.

Als elektrische Versorgungseinheit weist die Ansteuervorrichtung 1 ein Bordnetz 3 und eine Batterie 4 auf, die über eine Anschlussleitung 5 miteinander in Verbindung stehen. Über eine erste Versorgungsleitung 6 steht eine Logik-Schaltung 7 mit der Batterie 4 in Verbindung. Bei der Logik-Schaltung 7 kann es sich um einen Mikrocomputer (µC), einen ASIC oder einen sonstigen integrierter Schaltkreis handeln. Über eine Steuerleitung 8 steht die Logik-Schaltung 7 mit einem ersten Eingang eines UND-Gliedes 9 in Verbindung. Der Ausgang des UND-Gliedes 9 steht über eine Signalleitung 10 mit einer Endstufe 11 eines Leistungsmoduls in Verbindung. Letztere ist über eine Steuerleitung 12 mit dem Klimagebläse 2 verbunden, und steht mit dem Bordnetz 3 über eine dritte Versorgungsleitung 30 in Verbindung.

Über eine zweite Versorgungsleitung 13 steht die Batterie 4 mit einer ersten Überwachungseinrichtung 14 in Verbindung. Diese ist mit der Logik-Schaltung 7 über eine Signalleitung 15 verbunden. Die erste Überwachungseinrichtung 14 steht über eine sich in einem Verzweigungspunkt 16 verzweigende Signalleitung 17 mit einem ersten Signalleitungsabschnitt 18 mit der Logik-Schaltung 7 und mit einem zweiten Signalleitungsabschnitt 19 mit einem Freigabeschaltkreis 20 in Verbindung. Letzterer weist einen Halte-Schaltkreis 31 auf und ist mit der Logik-Schaltung 7 über eine Entsperr-Leitung 21 einerseits und über eine Diagnoseleitung 22 andererseits verbunden. Über eine Steuerleitung 23 steht der Freigabeschaltkreis 20 mit dem zweiten Eingang des UND-Gliedes 9 in Verbindung.

Eine Messleitung 24 verbindet eine zweite Überwachungseinrichtung 25, die gemeinsam mit der ersten Überwachungseinrichtung 14 einen Überwachungsschaltkreis der Ansteuervorrichtung 1 darstellt, mit dem Klimagebläse 2.

Über eine Fehlersignalleitung 26 steht die Überwachungseinrichtung 25 mit dem Freigabeschaltkreis 20 in Verbindung. Zwischen der Überwachungseinrichtung 25 und dem Freigabeschaltkreis 20 verzweigt sich die Fehlersignalleitung 26 in einen Verzweigungspunkt 27. Dieser steht über eine Verbindungsleitung 28 mit einem Verzweigungspunkt 29 in Verbindung, der auf der Diagnoseleitung 22 zwischen dem Freigabeschaltkreis 20 und der Logik-Schaltung 7 angeordnet ist.

Die Ansteuervorrichtung 1 funktioniert folgendermaßen:

Nach dem Aktivieren des Bordnetzes 3 und erfolgter Initialisierung der Ansteuervorrichtung 1 hat im Normalbetrieb von dieser die Steuerleitung 23 zwischen dem Freigabeschaltkreis 20 und dem UND-Glied 9 einen "High"-Pegel. In diesem Normalbetriebszustand steuert die Logik-Schaltung 7 über die Steuerleitung 8, das UND-Glied 9 und die Signalleitung 10 die Endstufe 11 an, die wiederum über die Steuerleitung 12 die Leistung des Klimagebläses 2 einstellt.

Auftretende Fehlfunktionen der Ansteuervorrichtung 1 können vom Überwachungsschaltkreis erkannt werden. Ein zu hoher im Klimagebläse fließender Strom wird über die Messleitung 24 von der zweiten Überwachungseinrichtung 25 registriert. Diese erzeugt auf der Fehlersignalleitung 26 und über den Verzweigungspunkt 27, die Verbindungsleitung 28, den Verzweigungspunkt 29 und die Diagnoseleitung 22 ein Fehlersignal, welches auf den entsprechenden Leitungswegen sowohl vom Freigabeschaltkreis 20 als auch von der Logik-Schaltung 7 registriert wird. Eine Unterspannung in der Batterie 4 bzw. im Bordnetz 3 wird von der ersten Überwachungseinrichtung 14 über die zweite Versorgungsleitung 13 registriert. Zu dem erfaßt die erste Überwachungseinrichtung 14 Fehlfunktionen der Logik-Schaltung 7 im Sinne einer "Watch Dog"-Funktion über die Signalleitung 15. Bei einer registrierten derartigen Fehlfunktion erzeugt die erste Überwachungseinrichtung 14 ein Fehlersignal auf der Signalleitung 17, welches über die Signalleitungsabschnitte 18 und 19 von der Logik-Schaltung 7 und dem Freigabeschaltkreis 20 registriert wird.

Wird ein Fehlersignal von der Logik-Schaltung 7 über den Leitungsabschnitt 18 einerseits oder die Diagnoseleitung 22 andererseits registriert, wird die Steuerleitung 8 auf einen "Low"-Pegel gesetzt, sodass die Signalleitung 10, gesteuert über das UND-Glied 9, ebenfalls einen "Low"-Pegel erhält und die Endstufe 11 deaktiviert wird. In analoger Weise setzt der Freigabeschaltkreis 20 die Steuerleitung 23 auf einen "Low"-Pegel, wenn er über die Fehlersignalleitung 26 bzw. den zweiten Signalleitungsabschnitt 19 ein Fehlersignal registriert. Auch in diesem Fall wird ein "Low"-Pegel der Signalleitung 10 erzwungen. Die Logik-Schaltung 7 und der Freigabeschaltkreis 20 arbeiten daher im Blick auf die Ansteuerung der Endstufe 11 redundant. Damit ist gewährleistet, dass auch dann, wenn die Logik-Schaltung 7 fehlerhaft arbeitet, ein auftretendes Fehlersignal über den Freigabeschaltkreis 20 wirksam zur Deaktivierung der Endstufe 11 führt.

Der Halte-Schaltkreis 31 gewährleistet, dass bei einmal aufgetretenem Fehlersignal auf der Fehlersignalleitung 26 bzw. dem zweiten Signalleitungsabschnitt 19 ein Fehlerstatus des Freigabeschaltkreises 20 und damit ein "Low"-Pegel auf der Steuerleitung 23 zunächst auch dann erhalten bleibt, wenn das Fehlersignal wegfällt. Erst ein entsprechendes Signal auf der Entsperr-Leitung 21 führt zu einer Entsperrung des Freigabeschaltkreises 20 und damit zu einem "High"-Pegel auf der Steuerleitung 23, was eine Aktivierung der Endstufe 1 ermöglicht.

Ob ein Fehlerzustand des Freigabeschaltkreises 20 vorliegt, kann die Logik-Schaltung 7 über die Diagnoseleitung 22 abrufen. Alternativ oder zusätzlich kann die Logik-Schaltung 7 auch indirekt über das Vorliegen eines Fehlerzustandes des Freigabeschaltkreises 20 aufgrund des aktuellen oder vergangenen Vorliegens eines Fehlersignals auf der Diagnoseleitung 22 über die Verbindungsleitung 28 von der zweiten Überwachungseinrichtung 25 einerseits bzw. über den ersten Signalleitungsabschnitt 18 von der ersten Überwachungseinrichtung 14 andererseits schließen. Eine Entsperrung des Freigabeschaltkreises 20 durch die Logik-Schaltung 7 findet nur statt, wenn eine interne Prüfung der Logik-Schaltung 7 einen fehlerfreien Zustand von dieser ergeben hat.

Der Freigabeschaltkreis 20 weist eine gegenüber der Logik-Schaltung 7 verringerte Signallaufzeit und zudem eine verringerte Signalreaktionszeit auf. Damit wird die Endstufe 11 bei Auftreten eines Fehlers über den Freigabeschaltkreis 20 schneller deaktiviert, als über die Logik-Schaltung 7. Dies gilt auch dann, wenn die Logik-Schaltung 7 fehlerfrei funktioniert.

Beim Auftreten einer Fehlfunktion, welche durch die erste Überwachungseinrichtung 14 erfaßt wird, erzeugt diese zusätzlich zum oben beschriebenen Fehlersignal auf der Signalleitung 17 ein Reset-Signal, mit dem eine Reinitialisierung der Logik-Schaltung 7 und des Freigabeschaltkreises 20 über die Signalleitungsabschnitte 18, 19 eingeleitet werden kann, falls dies erforderlich ist.

## Patentansprüche

1. Ansteuervorrichtung (1) für eine Verbrauchereinheit (2), insbesondere eines Kraftfahrzeugs, mit einer elektrischen Versorgungseinheit (3, 4), mit einem Logik-Schaltkreis (7), der über eine Steuerleitung (8, 9, 10) mit der Verbrauchereinheit (2) in Signalverbindung steht, mit einem fehlersignalempfangenden und -auswertenden Freigabeschaltkreis (20), der mit der Verbrauchereinheit (2) derart in Signalverbindung steht, dass eine Aktivierung der Verbrauchereinheit (2) über den Logik-Schaltkreis (7) nur dann erfolgt, wenn ein Freigabesignal des Freigabeschaltkreises (20) vorliegt, und mit einem mit dem Freigageschaltkreis (20) in Signalverbindung stehenden Überwachungsschaltkreis (14, 25), der eine erste Überwachungseinrichtung (14) aufweist zur Überwachung der Funktion des Logik-Schaltkreises (7) sowie mindestens eines Betriebszustandes der Ansteuervorrichtung (1), wobei der Überwachungsschaltkreis (14, 25) derart ausgeführt ist, dass er bei Vorliegen vorgegebener Betriebszustände ein Fehlersignal generiert und dieses an den Freigabeschaltkreis (20) zur Unterbindung des Freigabesignals sendet, **dadurch gekennzeichnet, dass** der Überwachungsschaltkreis (14, 25) eine zweite Überwachungseinrichtung (25) aufweist zur Überwachung der Verbrauchereinheit (2), wobei die erste (14) und die zweite Überwachungseinrichtung (25) sowohl mit dem Freigabeschaltkreis (20) als auch mit dem Logik-Schaltkreis (7) verbunden sind.

2. Ansteuervorrichtung nach Anspruch 1, **dadurch gekennzeichnet, dass** der Freigabeschaltkreis (20) einen Halte-Schaltkreis (31) umfasst, der derart ausgeführt ist, dass er nach dem Empfangen eines Fehlersignals durch den Überwachungsschaltkreis (14, 25) die Generierung eines Freigabesignals solange unterbindet, bis er ein Entsperrsignal empfängt.

3. Ansteuervorrichtung nach Anspruch 2, **dadurch gekennzeichnet, dass** der Logik-Schaltkreis (7) derart ausgeführt ist, dass er das Entsperrsignal generiert.

4. Ansteuervorrichtung nach einem der vorherigen Ansprüche, **dadurch gekennzeichnet, dass** der Logik-Schaltkreis (7) mit dem Freigabeschaltkreis (20) über eine Diagnoseleitung (22) in Verbindung steht.

5. Ansteuervorrichtung nach einem der vorhergehenden Ansprüche, **dadurch gekennzeichnet, dass** der Logik-Schaltkreis (7) derart ausgeführt ist, dass er Fehlersignale des Überwachungsschaltkreises (14, 25) empfängt und auswertet und eine Aktivierung der Verbrauchereinheit (2) nur dann einleitet, wenn kein Fehlersignal vorliegt.

6. Ansteuervorrichtung nach einem der vorhergehenden Ansprüche, **dadurch gekennzeichnet, dass** der Überwachungsschaltkreis (14, 25) eine Überwachungseinrichtung (14) zur Überwachung der elektrischen Versorgungseinheit (3, 4) aufweist.

7. Ansteuervorrichtung nach einem der vorhergehenden Ansprüche, **dadurch gekennzeichnet, dass** der Überwachungsschaltkreis (14, 25) eine Initialisierungseinrichtung (14) zur Initialisierung des Logik-Schaltkreises (7) und/oder des Freigabeschaltkreises (20) aufweist.

## Claims

1. Actuation device (1) for a load unit (2), in particular of a motor vehicle, having an electric supply unit (3, 4), having a logic circuit (7) which has signal-conducting connection to the load unit (2) via a control line (8, 9, 10), having a fault-signal-receiving and fault-signal-evaluating enabling circuit (20) which has a signal-conducting connection to the load unit (2) in such a way that the load unit (2) is activated by means of the logic circuit (7) only if an enabling signal of the enabling circuit (20) is present, and having a monitoring circuit (14, 25) which has a signal-conducting connection to the enabling circuit (20) and which has a first monitoring device (14) for monitoring the function of the logic circuit (7), and at least one operating state of the actuation device (1), the monitoring circuit (14, 25) being embodied in such a way that when predefined operating states are present a fault signal is generated and is transmitted to the enabling circuit (20) in order to cancel the enabling signal, **characterized in that** the monitoring circuit (14, 25) has a second monitoring device (25) for monitoring the load unit (2), wherein the first monitoring device (14) and the second monitoring device (25) are connected both to the enabling circuit (20) and to the logic circuit (7).

2. Actuation device according to Claim 1, **characterized in that** the enabling circuit (20) comprises a sample-and-hold circuit (31) which is embodied in such a way that after a fault signal has been received by the monitoring circuit (14, 25) said sample-and-hold circuit (31) cancels the generation of an enabling signal until it receives a release signal.

3. Actuation device according to Claim 2, **characterized in that** the logic circuit (7) is embodied in such a way that it generates the release signal.

4. Actuation device according to one of the preceding claims, **characterized in that** the logic circuit (7) is connected to the enabling circuit (20) via a diagnostic line (22).

5. Actuation device according to one of the preceding claims, **characterized in that** the logic circuit (7) is embodied in such a way that it receives fault signals from the monitoring circuit (14, 25) and evaluates them and initiates activation of the load unit (2) only if there is no fault signal present.

6. Actuation device according to one of the preceding claims, **characterized in that** the monitoring circuit (14, 25) has a monitoring device (14) for monitoring the electric supply unit (3, 4).

7. Actuation device according to one of the preceding claims, **characterized in that** the monitoring circuit (14, 25) has an initialization device (14) for initializing the logic circuit (7) and/or the enabling circuit (20).

## Revendications

1. Dispositif de commande d'une charge 2, notamment d'un véhicule automobile, comportant une unité d'alimentation électrique 3, 4, un circuit logique 7 relié par une ligne de commande 8, 9, 10 à la charge 2 pour transmettre des signaux, un circuit 20 de libération recevant des signaux de défauts et les exploitant, et qui est en liaison de transmission de signaux avec la charge 2 de façon à n'activer la charge 2 par le circuit logique 7 qu'en présence d'un signai de libération fourni par le circuit de libération 20 ainsi qu'un circuit de surveillance 14, 25 en liaison de transmission de signaux avec le circuit de libération 20 et comportant une première installation de surveillance 14 pour surveiller le fonctionnement du circuit logique de commutation 7 ainsi qu'au moins un état de fonctionnement du dispositif de commande 1, le circuit de surveillance 14, 25 étant réalisé pour qu'en présence d'états de fonctionnement prédéfinis, il génère un signal de défaut et envoie celui-ci au circuit de libération 20 pour interdire le signal de libération,
**caractérisé en ce que**
le circuit de surveillance 14, 25 comporte une seconde installation de surveillance 25 pour surveiller la charge 2, la première 14 et la seconde installation de surveillance 25 étant reliées à la fois au circuit de libération 20 et au circuit logique 7.

2. Dispositif de commande selon la revendication 1,
**caractérisé en ce que**
le circuit de libération 20 comprend un circuit de maintien 31 réalisé pour qu'après la réception d'un signal de défaut du circuit de surveillance 14, 25, il interdit la génération d'un signal de libération jusqu'à la réception d'un signal de déblocage.

3. Dispositif de commande selon la revendication 2,
**caractérisé en ce que**
le circuit logique 7 est réalisé pour générer le signal de déblocage.

4. Dispositif de commande selon l'une des revendications précédentes,
**caractérisé en ce que**
le circuit logique 7 est relié au circuit de libération 20 par une ligne de diagnostic 22.

5. Dispositif de commande selon l'une des revendications précédentes,
**caractérisé en ce que**
le circuit logique 7 est réalisé pour recevoir des signaux de libération du circuit de surveillance 14, 25 et les exploiter, et n'activer la charge 2 qu'en l'absence de signal de défaut.

6. Dispositif de commande selon l'une des revendications précédentes,
**caractérisé en ce que**
le circuit de surveillance 14, 25 comporte une installation de surveillance 14 pour surveiller l'unité d'alimentation électrique 3, 4.

7. Dispositif de commande selon l'une des revendications précédentes,
**caractérisé en ce que**
le circuit de surveillance 14, 25 comporte une installation d'initialisation 14 pour initialiser le circuit logique 7 et/ou le circuit de libération 20.
